# EUROPÄISCHE PATENTSCHRIFT

(11) **EP 2 827 968 B1**
(45) Veröffentlichungstag und Bekanntmachung des Hinweises auf die Patenterteilung: **08.08.2018**
(21) Anmeldenummer: 13711368.4
(22) Anmeldetag: 21.03.2013
(51) Int. Cl.: B01D 46/52, B01D 46/10, B01D 46/00

(54) **FILTERELEMENT MIT REINIGUNGSEINHEIT FÜR GROSSE VOLUMENSTRÖME**
FILTER ELEMENT WITH CLEANING UNIT FOR LARGE VOLUME FLOWS
ELÉMENT DE FILTRE DOTÉ D'UNE UNITÉ DE NETTOYAGE POUR GRANDS DÉBITS VOLUMIQUES

(30) Priorität: 21.03.2012 EP 12160583
(43) Veröffentlichungstag der Anmeldung: 28.01.2015
(73) Patentinhaber: Inauen, Urs, 9050 Appenzell (CH)
(72) Erfinder: Inauen, Urs, 9050 Appenzell (CH)
(74) Vertreter: Frischknecht, Harry Ralph
(86) Internationale Anmeldenummer: PCT/EP2013/055929
(87) Internationale Veröffentlichungsnummer: WO 2013/139907

(56) Entgegenhaltungen:
- EP-A2- 0 669 154
- DE-A1- 4 403 634
- DE-A1- 19 510 686
- DE-A1- 19 722 840
- US-A- 5 215 656
- US-A- 5 672 281
- US-A1- 2005 120 881
- US-A1- 2011 209 622
- DATABASE WPI Week 199953 Thomson Scientific, London, GB; AN 1999-614237 XP002682340, & JP 11 267435 A (MATSUSHITA SEIKO KK) 5. Oktober 1999 (1999-10-05)

## Beschreibung

### TECHNISCHES GEBIET

Die vorliegende Erfindung betrifft ein Filterelement für grosse Volumenströme nach dem Oberbegriff von Anspruch 1.

### STAND DER TECHNIK

Abluft aus Ställen, wie beispielsweise Ställen zur Aufzucht oder Haltung von Tieren, muss aufgrund von gesetzlichen Vorschriften gefiltert werden. Dabei wird die Abluft beispielsweise von Staubpartikeln gereinigt, bevor die Abluft der Umgebung wieder zugeführt wird.

Aus dem Stand der Technik sind Ställe bekannt, in welchen Filterpatronen als Filterelemente eingesetzt werden. Solche Filterpatronen verfügen typischerweise über eine sehr grosse Filterfläche. Aufgrund des Aufbaus von derartigen Filterpatronen muss das zu reinigende Medium, hier also die Luft, typischerweise durch im Querschnitt relativ kleine Öffnungen geführt werden, was zu massiven Druckverlusten führt. Die Druckverluste beeinträchtigen den Wirkungsgrad des Filters massiv. Zudem wird auch der Volumenstrom pro Zeiteinheit durch die kleinen Querschnitte negativ beeinflusst. Die Druckverluste können durch die Anordnung von Gebläsen kompensiert werden. Alternativ können auch mehrere von solchen Patronenfilter nebeneinander angeordnet werden, so dass der benötigte Volumenstrom erreicht wird. Beide Massnahmen sind in der Praxis zwar umsetzbar, führen aber zu grossem Mehraufwand bezüglich Montagezeit und finanziellen Mitteln.

In vielen Anwendungen wird die Abluft aus einem Stall zudem noch über einen Wärmetauscher geführt, so dass die Abwärme nochmals genützt werden kann. Auch diesbezüglich wirken sich die Druckverluste und/oder die Reduzierung des Volumenstromes ebenfalls negativ auf den Wärmetauschervorgang aus.

Dokument US5672281 offenbart eine Filteranordnung umfassend ein Filterelement, das über einer Öffnung in einer Ebene anordbar ist und eine Reinigungseinheit, welche im Bereich der Filterseite des Filterelements angeordnet ist, wobei die Reinigungseinheit relativ zum Filterelement bewegbar ausgebildet ist.

### DARSTELLUNG DER ERFINDUNG

Ausgehend von diesem Stand der Technik liegt der Erfindung eine Aufgabe zugrunde, eine Filteranordnung anzugeben, welches die Nachteile des Standes der Technik überwindet. Insbesondere soll die Filteranordnung effizienter einsetzbar sein.

Eine solche Aufgabe löst die Filteranordnung nach Anspruch 1. Demgemäss umfasst die Filteranordnung eine Ebene mit einer die Ebene durchdringenden Öffnung und ein über dieser Öffnung angeordnetes Filterelement zur Filterung eines Fluides, insbesondere eines gasförmigen Fluides, wobei das Fluid von einer Rohfluidseite zu einer Filterseite durch das Filterelement und die Öffnung hindurchführbar und durch das Filterelement reinigbar ist. Das Filterelement erstreckt sich von dieser Ebene mindestens über einen ersten Abschnitt von der Ebene weg und über einen zweiten Abschnitt, der sich direkt oder indirekt dem ersten Abschnitt anschliesst, auf die Ebene zurück. Folglich erstreckt sich das Filterelement also abschnittsweise beabstandet von der Ebene über der Ebene. Durch die Abschnitte und die Ebene wird ein Zwischenraum begrenzt. Weiter umfasst die Filteranordnung eine Reinigungseinheit zur Reinigung des Filterelementes, welche in besagtem Zwischenraum angeordnet ist. Die Reinigungseinheit ist durch den Impuls beim Austritt der Luft aus den Luftdüsen von einer Ruhelage in eine Endlage bewegbar.

Die Anordnung von den beiden Abschnitten, welche sich von der Ebene bzw. zur Ebene erstrecken, hat den Vorteil, dass die Filterfläche erhöht werden kann, wodurch der Volumenstrom des zu reinigenden Fluides ebenfalls grösser gewählt werden kann. Weiter kann ein günstiges Verhältnis zwischen Öffnungsquerschnitt und Filteroberfläche einfach durch den Grad des Überragens der Ebene durch das Filterelement, festgelegt werden. Die Anordnung der Reinigungseinheit in diesem Zwischenraum hat den Vorteil, dass der Filter sehr einfach und äusserst effizient gereinigt werden kann.

Die besagte Ebene kann beispielsweise eine Wand, ein Boden und/oder ein Dach eines Gebäudes sein, wobei die Öffnung dann eine Öffnung in besagter Wand bzw. Boden bzw. Dach ist.

Die Reinigungseinheit ist vorzugsweise im Bereich der Filterseite angeordnet und relativ zum Filterelement über das Filterelement bewegbar ausgebildet. Die Reinigungseinheit stellt dabei eine Reinigungswirkung bereit, so dass die an der Rohfluidseite anhaftenden Kontaminationen einfach vom Filter lösbar sind. Besonders bevorzugt ist die Reinigungseinheit verschwenkbar zum Filter ausgebildet. Die Reinigungseinheit umfasst Luftdüsen oder Öffnungen, mittels welchen das Filterelement mit Druckluft beaufschlagbar ist, wobei Ablagerungen auf dem Filterelement in Richtung der Rohfluidseite vom Filterelement entfernbar sind. Durch die Anordnung auf der Filterseite und der Bereitstellung des entsprechenden Luftstromes kann das Filterelement derart abgereinigt werden, dass die Kontaminationen auf der Rohfluidseite vom Filter wegfallen. Somit wird die Filterseite, also die saubere Seite, nicht mit den Kontaminationen belastet. Andere Arten der Reinigung sind auch denkbar.

Vorzugsweise weist die Reinigungseinheit die Gestalt eines Bügels mit zwei Lagerarmen und einem die Lagerarme verbindenden Bügelarm auf, wobei im Bügelarm die besagten Luftdüsen angeordnet sind.

Vorzugsweise ist die Reinigungseinheit verschwenkbar um eine Achse, welche vorzugsweise der besagten Mittelachse entspricht, ausgebildet.

Die Luftdüsen stehen vorzugsweise winklig zur Richtung der Bewegung der Reinigungseinheit oder in Richtung der Bewegung der Reinigungseinheit. Die Luftdüsen sind verschwenkbar, so dass die Richtung der Bewegung veränderbar ist. Die Luftdüsen sind besonders bevorzugt zu den besagten Lagerarmen verschwenkbar. Besonders bevorzugt sind die Luftdüsen von einer ersten stabilen Position in eine zweite stabile Position verschwenkbar. In der ersten stabilen Position lässt sich die Reinigungseinheit von der Ruhelage in die Endlage bewegen und in der zweiten stabilen Position lässt sich die Reinigungseinheit von der Endlage in die Ruhelage bewegen.

Besonders bevorzugt umfasst die Reinigungseinheit zwei Lagerarme und einen zu den Lagerarmen verschwenkbaren Bügelarm, wobei im Bügelarm die besagten Luftdüsen angeordnet sind. Durch die Verschwenkbarkeit des Bügelarms lässt sich die Verschwenkbarkeit der Luftdüsen besonders einfach erreichen.

Der Bügelarm steht mit einem Mechanismus mit den Lagerarmen in Verbindung, wobei der Mechanismus ein Kipphebel mit einer Feder umfasst, welcher im Wesentlichen zwei stabile Positionen einnimmt. Bei den Positionen handelt es sich um die erste und die zweite Position.

Vorzugsweise sind weiter Anschlagsmittel angeordnet, welche mit dem Kipphebel zusammenarbeiten, wobei der Kipphebel durch die Anschlagsmittel in die stabilen Positionen bewegbar ist und wobei in Ruhelage und Endlage jeweils mindestens ein Anschlagsmittel angeordnet ist. Der Kipphebel kommt bei Erreichen der Ruhelage oder der Endlage mit dem Anschlagsmittel in Kontakt, worauf die Luftdüsen verschwenkt werden.

Je nach Einbaulage kann die Bewegung von der Endlage in die Ruhelage auch durch ein Gegengewicht erfolgen, wobei durch das Gegengewicht ist die Reinigungseinheit dann von der Endlage in die Ruhelage bewegbar. Mit anderen Worten: Die Reinigungseinheit ist durch die winklige Anordnung von Luftdüsen und durch den Impuls beim Austritt der Luft aus den Luftdüsen von einer Ruhelage in eine Endlage bewegbar und durch ein Gegengewicht von der Endlage in die Ruhelage bewegbar.

Vorzugsweise erstreckt sich das Filterelement um eine in der bzw. parallel zur Ebene verlaufende Mittelachse halbkreisförmig von der Ebene weg bzw. verläuft auf die Ebene zu. Das Filterelement weist somit die Gestalt eines halben durch die Mittelachse geschnittenen Hohlzylinders auf. Alternativ kann das Filterelement auch elliptisch oder eckig, insbesondere 6-eckig oder 8-eckig oder vieleckig, ausgebildet sein.

Vorzugsweise verläuft die Mittelachse in der Horizontalen oder in der Vertikalen. Hierdurch kann das Filterelement unterschiedlich orientiert und nach den Bedürfnissen des Benutzers ausgerichtet werden.

Bevorzugterweise erstreckt sich das Filterelement von der besagten Ebene in die Rohfluidseite hinein. Kontaminationen werden daher bei der Reinigung des Filters nicht zur Filterseite gelangen, sondern verbleiben im kontaminierten Bereich. Das Erstrecken des Filters in die Rohfluidseite hinein hat den somit Vorteil, dass die herausgefilterten Kontaminationen einfach und sicher von Filterelement in der Rohfluidseite entfernt werden können.

Vorzugsweise ist die Filterfläche um einen Faktor im Bereich von 10 bis 50, besonders bevorzugt im Bereich von 15 bis 30 grösser als die Querschnittsfläche der Öffnung. Bei solchen Verhältnissen wurden in der Praxis besonders gute Resultate erzielt.

Die Filteranordnung umfasst weiterhin mindestens eine Seitenwand, wobei die mindestens eine Seitenwand sich über Zwischenräume zwischen der Ebene und dem Rand des Filterelementes erstreckt. Durch die Seitenwand werden besagte Zwischenräume entsprechend abgeschlossen, sodass das aus der Rohfluidseite zur Filterseite zu führende Fluid zwingend das Filterelement passieren muss.

Mit anderen Worten erstrecken sich das Filterelement und gegebenenfalls die Seitenwand vollständig über den Querschnitt der Öffnung, so dass kontaminiertes Fluid zwingend das Filterelement durchdringen muss, bevor die Öffnung erreicht wird.

Vorzugsweise umfasst das Filterelement ein plissierter Filter, insbesondere aus einem Polyestervlies. Andere Materialien sind auch denkbar.

Das Filterelement weist, insbesondere bei Anwendung in einem Stall, vorzugsweise eine Filteroberfläche von mindestens 15 m², besonders bevorzugt von mindestens 20 m² aufweist. Der Querschnitt der Öffnung liegt vorzugsweise bei etwa 1 m². Das Filterelement ist vorzugsweise ein Luftfilter.

Besonders bevorzugt erstreckt sich das Filterelement benachbart zu den Rändern der Öffnung und entlang der Ränder der Öffnung oder liegt in einem vergleichsweise kleinen Abstand zu den Rändern.

Vorzugsweise umfasst die Filteranordnung weiterhin einen Wärmetauscher umfasst, der in Flussrichtung des Fluides nach dem Filterelement auf der Filterseite angeordnet ist.

Ein Stall zur Aufzucht oder zur Haltung von Tieren, umfasst mindestens einen Boden, mindestens eine von diesem Boden wegstehende Seitenwand, die einen Stallinnenraum definiert, und ein Dach, das den Stallinnenraum nach oben hin abschliesst. Weiterhin umfasst der Stall mindestens eine Filteranordnung nach obiger Beschreibung, wobei in der besagten Seitenwand und/oder dem besagten Dach die besagte Öffnung angeordnet ist, wobei die Ebene im Wesentlichen durch Seitenwand und/oder Dach aufgespannt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Filteranordnung nach einer ersten Ausführungsform;
- Fig. 2: eine Seitenansicht der Filteranordnung nach Figur 1;
- Fig. 3: eine perspektivische Ansicht der Filteranordnung nach Figur 1 ohne dem Filterelement;
- Fig. 4: eine perspektivische Ansicht der kompletten Filteranordnung nach Figur 1;
- Fig. 5: eine weitere perspektivische Ansicht der Filterseite von der Filteranordnung nach Figur 1;
- Fig. 6: eine weitere Ausführungsform der Filteranordnung nach Figur 1; und
- Fig. 7a: eine perspektivische Ansicht einer Filteranordnung gemäss einer weiteren Ausführungsform;
- Fig. 7b: eine Detailansicht der Figur 7a;
- Fig. 8: eine Draufsicht auf die Filteranordnung gemäss der Fig. 7a; und
- Fig. 9: eine weitere Ansicht der Fig. 8.

### BESCHREIBUNG BEVORZUGTER AUSFÜHRUNGSFORMEN

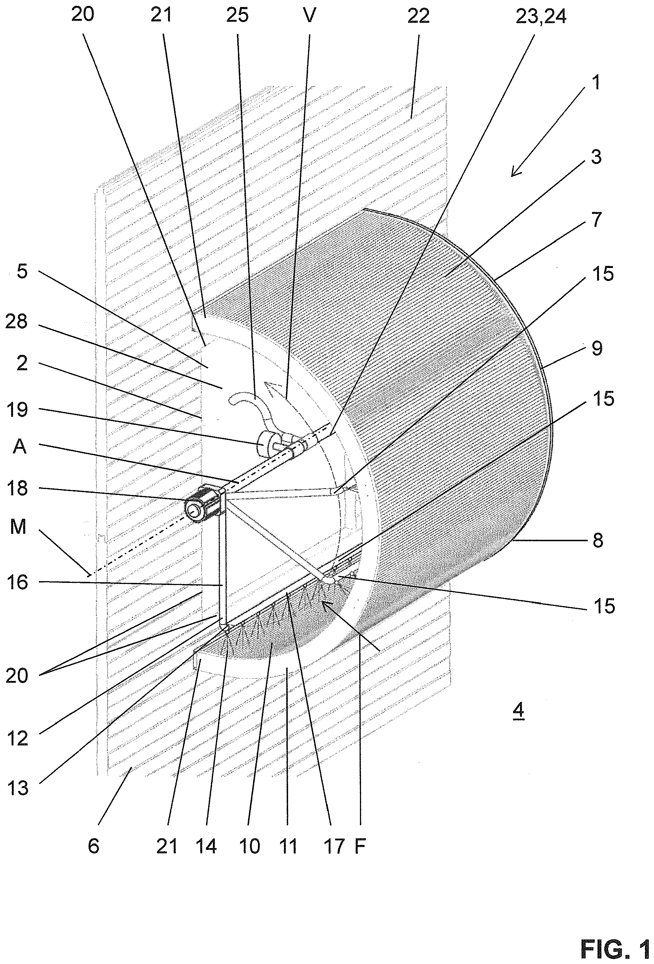

In der Figur 1 wird eine Filteranordnung zur Filterung eines Fluides, insbesondere eines gasförmigen Fluides, wie Luft, gezeigt. Die Filteranordnung 1 dient zur Entfernung von Kontaminationen im Fluid. Solche Filter können beispielsweise zur Filterung von Abluft von Ställen eingesetzt werden. Das kontaminierte Fluid in diesem Anwendungsfall ist beispielsweise mit Staub versetzte Luft, wobei der Staub aus der Luft entfernt werden soll. Selbstverständlich ist die Filteranordnung aber auch in anderen Einsatzgebieten, nicht nur in Ställen, einsetzbar.

Die Filteranordnung 1 gemäss der Figur 1 umfasst eine Ebene 6, welche hier durch eine Wand 22 definiert ist, eine in der Ebene 6 angeordnete Öffnung 2 und ein über dieser Öffnung 2 angeordnetes Filterelement 3 zur Filterung des Fluides. In einer allgemeinen Form kann auch gesagt werden, dass die Öffnung 2 in der Ebene 6 angeordnet ist. Das Fluid ist dabei von einer Rohfluidseite 4 zu einer Filterseite 5 durch das Filterelement 3 und die Öffnung 2 hindurchführbar. Dies wird mit dem Pfeil F entsprechend gezeigt. Unter einer Rohfluidseite 4 wird diejenige Seite verstanden, bei welcher das Fluid mit den Kontaminationen kontaminiert ist. Auf der Filterseite 5, welche bezüglich des Filterelementes 3 gegenüber der Rohrfluidseite 4 liegt, ist das Fluid von den Kontaminationen durch das Filterelement 3 gereinigt und kann somit als dekontaminiert betrachtet werden.

Bezüglich der Ebene 6 kann mit anderen Worten auch gesagt werden, dass die Seitenränder 5 der Öffnung 2 die besagte Ebene 6 aufspannen.

Das Filterelement 3 erstreckt sich von dieser Ebene 6 bzw. von der Wand 22 über einen ersten Abschnitt 7 von der Ebene 6 hinweg. Über einen zweiten Abschnitt 8, der sich direkt oder indirekt dem ersten Abschnitt 7 anschliesst, erstreckt sich das Filterelement auf die Ebene 6 zurück. Mit anderen Worten kann also gesagt werden, dass sich das Filterelement 3 von der Ebene 6 erhebt und mindestens abschnittsweise von dieser Ebene 6 abgesetzt verläuft. Der Vorteil dieser Absetzung ist dabei die Erhöhung der Filterfläche bei gleichbleibendem Querschnitt der Öffnung 2.

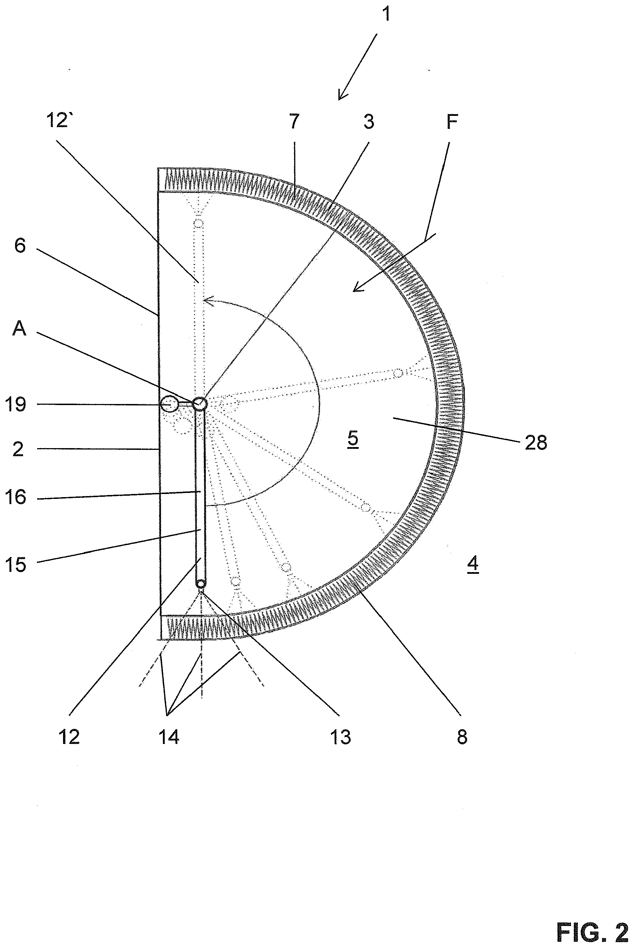

Von den Figuren 1 und 2 kann weiterhin gut erkannt werden, dass die Filteranordnung 1 weiter eine Reinigungseinheit 12 zur Reinigung des Filterelementes 3 umfasst. Filterelement 3 bzw. die Abschnitte 7 und 8 und die Ebene 6 begrenzen einen Zwischenraum 28, in welchem eine Reinigungseinheit 12 angeordnet ist.

Vorzugsweise ist die Filterfläche um einen Faktor im Bereich von 10 bis 50, besonders bevorzugt im Bereich von 15 bis 30 grösser als die Querschnittsfläche der Öffnung. Bei solchen Verhältnissen wurden in der Praxis besonders gute Resultate erzielt. Unter der Filterfläche wird die wirksame Oberfläche des Filtermediums des Filters verstanden.

In der Figur 1 wird eine besonders bevorzugte Ausbildung des Filterelementes 3 gezeigt. Dabei erstreckt sich das Filterelement 3 um eine in der Ebene 6 verlaufende Mittelachse M halbkreisförmig von der Ebene 6 weg bzw. auf die Ebene 6 zu. Folglich wird der erste Abschnitt 7 und der zweite Abschnitt 8 durch den besagten Halbkreis bereitgestellt. Der erste Abschnitt 7 und der zweite Abschnitt 8 schliessen hier direkt aneinander an. Es kann mit anderen Worten auch gesagt werden, dass sich das Filterelement 3 in der besonders bevorzugten Ausführungsform konkav von der Ebene 6 über die Öffnung 2 erstreckt.

Die Mittelachse M kann alternativ auch parallel beabstandet zur Ebene 6 verlaufen, wobei dann das Filterelement 3 zwischen der Ebene 6 und der halbkreisförmigen Ausbildung über einen Abschnitt 21 im Wesentlichen senkrecht zur Ebene 6 verläuft.

In der vorliegenden Ausführungsfonn verläuft die Mittelachse M in der Horizontalen. Alternativ kann sich die Mittelachse M auch in der Vertikalen erstrecken, womit das Filterelement 3 entsprechend verschwenkt angeordnet ist.

Das Filterelement 3 erstreckt sich vorzugsweise von der besagte Ebene 6 in die Rohfluidseite 4 hinein. Dies hat den Vorteil, dass bei einer Reinigung des Filterelementes 3 die herausgefilterten Staubpartikel oder andere Kontaminationen auf der Rohfluidseite 4 einfach entfernt werden können. Zudem können die Kontaminationen auf der Rohfluidseite 4 entfernt werden, was den Vorteil hat, dass die Kontaminationen nicht auf der sauberen Filterseite 5 entfernt werden müssen. Dabei kann das Filterelement 3 beispielsweise von Hand mit einem Besen oder mit Druckluft gereinigt werden. Eine bevorzugte Reinigungsvorrichtung wird weiter unten beschrieben.

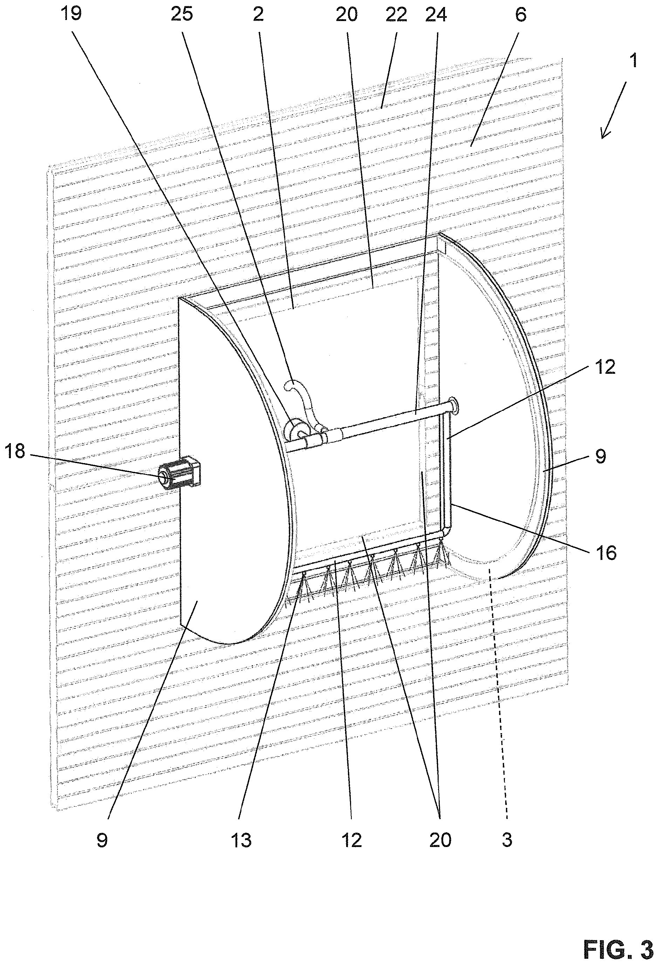

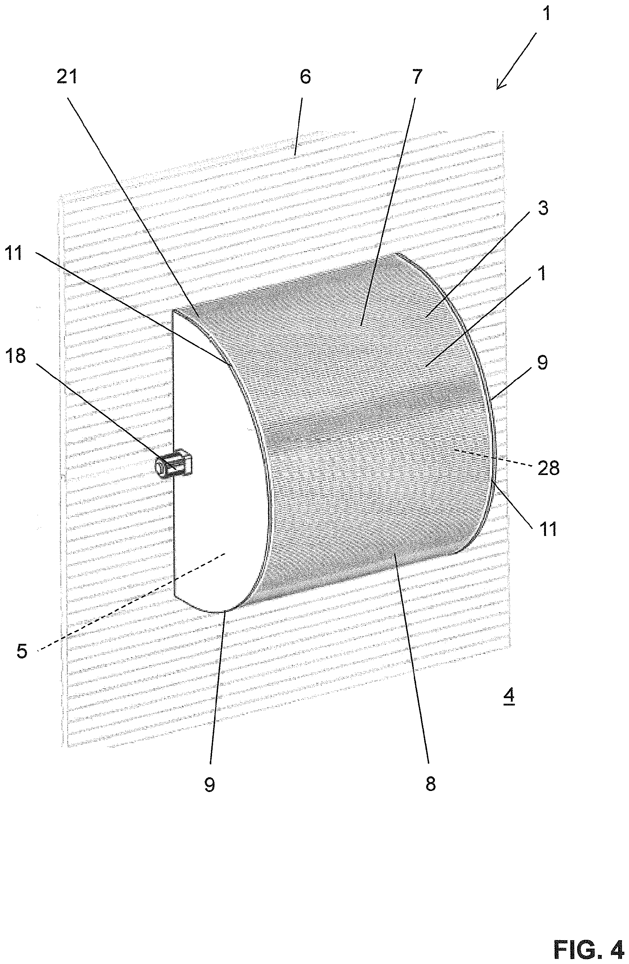

Die Filteranordnung 1 umfasst gemäss Figuren 1 bis 6 weiterhin mindestens eine Seitenwand 9. In der vorliegenden Ausführungsform mit der halbkreisförmigen Ausbildung des Filterelementes 2 sind zwei Seitenwände 9 nötig, sowie dies in der Figur 3 und 4 gezeigt wird. In der Figur 3 wird das Filterelement 2 der Übersicht halber nicht gezeigt. Die Seitenwände 9 erstrecken sich dabei über Zwischenräume 10 zwischen der Ebene 6 und dem Rand 11 des Filterelementes 3. Vorzugsweise wird das Filterelement 2 mit einer Vergussmasse mit den Seitenwänden 9 verbunden. Die Vergussmasse wirkt dabei zugleich als Dichtelement. Alternativ kann zwischen der Seitenwand 9 und dem Filterelement eine Dichtung vorgesehen sein. Die Seitenwände 9 verhindern einen unkontrollierten Durchtritt des kontaminierten Fluides zur Öffnung 2. Unter einem unkontrollierten Durchtritt wird in diesem Zusammenhang ein Durchtritt des Fluides ohne Passieren des Filterelementes 3 verstanden.

Das Filterelement 3 und gegebenenfalls die Seitenwand 9 erstrecken sich vorzugsweise vollständig über dem gesamten Querschnitt der Öffnung 2. Somit wird sichergestellt, dass ein kontaminiertes Fluid zwingend das Filterelement 3 durchdringen muss, bevor die Öffnung 2 erreicht wird. Ein unkontrollierter Durchtritt von kontaminierten Fluid aus der Rohfluidseite durch die Öffnung 2 ist somit nicht möglich und kann verhindert werden.

In anderen nicht gezeigt Ausführungsformen kann das Filterelement 3 auch die Gestalt einer Kugel, die sich von der Ebene 6 in die Rohfluidseite 4 hineinerstreckt, aufweisen. Gerade bei kreisrunden Öffnungen könnte dies vorteilhaft sein, da das Filterelement 3 dann von der Ebene 6 sich kugelförmig den Weg streckt.

Das Filterelement 3 umfasst vorzugsweise ein plissierter Filter aus einem Polyestervlies. Solche Filter sind typischerweise in der Lage, Partikel im Fluid mit einer Grösse von grösser als 1 µm zu filtern.

Die Filteroberfläche, insbesondere bei Anwendung in einem Stall, liegt vorzugsweise über 15m², besonders bevorzugt über mindestens 20m². Bei einer derartigen Filteroberfläche können Volumenströme von mehreren Tausend m³/h umgesetzt bzw. durchgesetzt werden. Der Querschnitt der Öffnung 2 ist bei diesen Abmessungen des Filters vorzugsweise gut 1 m2, wodurch ein genügend grosser Öffnungsquerschnitt mit minimalen Druckverlusten bereitstellbar ist.

Die Reinigungseinheit 12, welche in den Figuren 1 und 2 gut erkennbar ist, ist im Bereich der Filterseite 5 angeordnet und relativ zum Filterelement 3 bewegbar ausgebildet. Die bewegbare Ausbildung hat den Vorteil, dass die Reinigungseinheit 12 über das Filterelement 3 bewegbar ist, sodass alle Stellen des Filterelements 3 durch die Wirkung der Reinigungseinheit 12 erfasst werden.

Die Reinigungseinheit 12 umfasst hier Luftdüsen oder Öffnungen 13, mittels welchen das Filterelement 2 mit Druckluft 14 beaufschlagbar ist. Die Druckluft 14 fliesst dabei von der Filterseite 5 zur Rohfluidseite 4, also in Gegenrichtung des zu reinigenden Fluides. Durch die Druckluft 14 werden Ablagerungen auf dem Filterelement 3 in Richtung der Rohfluidseite 4 vom Filterelement 3 entfernt. Die Ablagerungen entsprechen dabei im Wesentlichen den Kontaminationen, welche aus dem Fluid gefiltert wurden. Aufgrund der Tatsache, dass die Druckluft in Richtung Rohfluidseite 4 bereitgestellt wird, werden die Ablagerungen ebenfalls im Bereich der Rohfluidseite 4 vom Filterelement 2 gelöst. Folglich wird bei Reinigungsvorgang nicht die Filterseite 5 mit den Ablagerungen kontaminiert.

In der vorliegenden Ausführungsform umfasst die Reinigungseinheit 12 einen Bügel 15 mit zwei Lagerarmen 16 und einem die Lagerarme 16 verbindenden Bügelarm 17. Im Bügelarm 17 sind die besagten Luftdüsen 13 angeordnet. Über die Lagerarme 16 ist die Reinigungseinheit 12 drehbar um eine Achse A gelagert. In den Figuren 1 und 2 wird der Bügel 15 in verschiedenen Positionen gezeigt. Der Bügel 15 ist dabei entlang dem Pfeil V verschwenkbar.

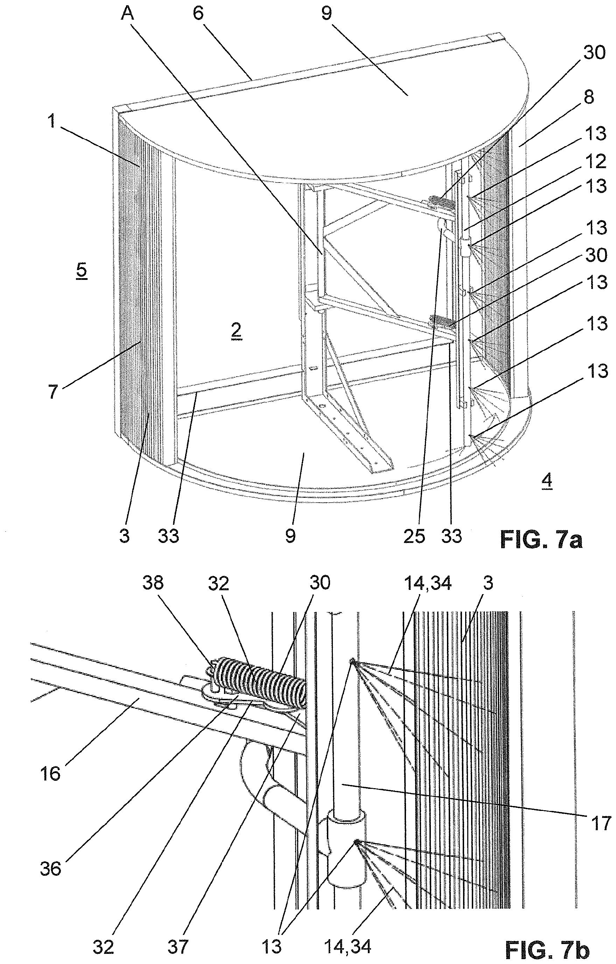

Die Achse A, um welche die Reinigungseinheit 12 verschwenkbar ist, entspricht vorzugsweise der besagten Mittelachse M. Achse A und die Mittelachse M verlaufen dabei kollinear zueinander. Die Reinigungseinheit kann durch die Anordnung der Luftdüsen 13 und durch den Impuls beim Austritt der Luft aus den Luftdüsen 13 bewegt werden. Hierbei kann auf einen Motor 18 verzichtet werden. In diesem Fall müssen die Luftdüsen 13 dabei so orientiert sein, dass eine entsprechende Bewegung bereitstellbar ist. Somit bewegen die Luftdüsen 13 die Reinigungseinheit 12 von der Ausgangslage in die Endlage. Für die Bewegung von der Endlage in die Ausgangslage weist dann die Reinigungseinheit 12 weiter ein Gegengewicht 19 auf, welches dafür sorgt, dass die Reinigungseinheit 12 von der oberen Endlage wieder in die Ausgangslage bewegbar ist. Das Gegengewicht 19 ist dabei exzentrisch zur Achse A bzw. M angeordnet. In einer anderen Ausführungsform, wie in den Figuren 7a bis 9, gezeigt erfolgt die Bewegung von der Ausgangslage oder Ruhelage in die Endlage und von der Endlage in die Ausgangslage durch verschwenkbare Luftdüsen 13. In diesem Fall kann auf das Gegengewicht verzichtet werden.

Die Bewegung der Reinigungseinheit 12 kann weiter in der Figur 2 gut erkannt werden. Hier wird die Reinigungseinheit 12 in der Ausgangslage gezeigt und entlang des Pfeils V in die Endlage bewegt. In der Endlage wird die Reinigungseinheit mit dem Bezugszeichen 12' gezeigt.

Die Bewegung der Reinigungseinheit 12 von der Ausgangslage in die Endlage kann dabei kontinuierlich oder aber getaktet erfolgen. Bei der kontinuierlichen Bewegung wird die Druckluft 14 bevorzugt kontinuierlich den Luftdüsen 13 zugeführt, so dass eine konstante Reinigungswirkung erlaubt wird. Allerdings ist bei einer geringen Verschmutzung auch eine getaktete Zuführung der Druckluft denkbar. Bei der getakteten Bewegung kann die Druckluft 14 sowohl getaktet als auch kontinuierlich zugeführt werden.

Die Druckluft selbst wird über einen Druckluftanschluss 23 den Luftdüsen 13 zugeführt. Der Druckluftanschluss 23 umfasst hier einen Stab 24, welcher dem Bügel 15 bzw. den Lagerarmen 16 in Verbindung steht, sowie einen Schlauch 25. Der Schlauch 25 steht mit der Druckluftquelle in Verbindung und führt die Druckluft dem Stab 24 zu. Über diesen Stab 24 kann die Druckluft den Druckluftdüsen 13 zugeführt werden, wobei die Bügel 15 als Zuleitung dienen und entsprechend als Rohre ausgebildet sind.

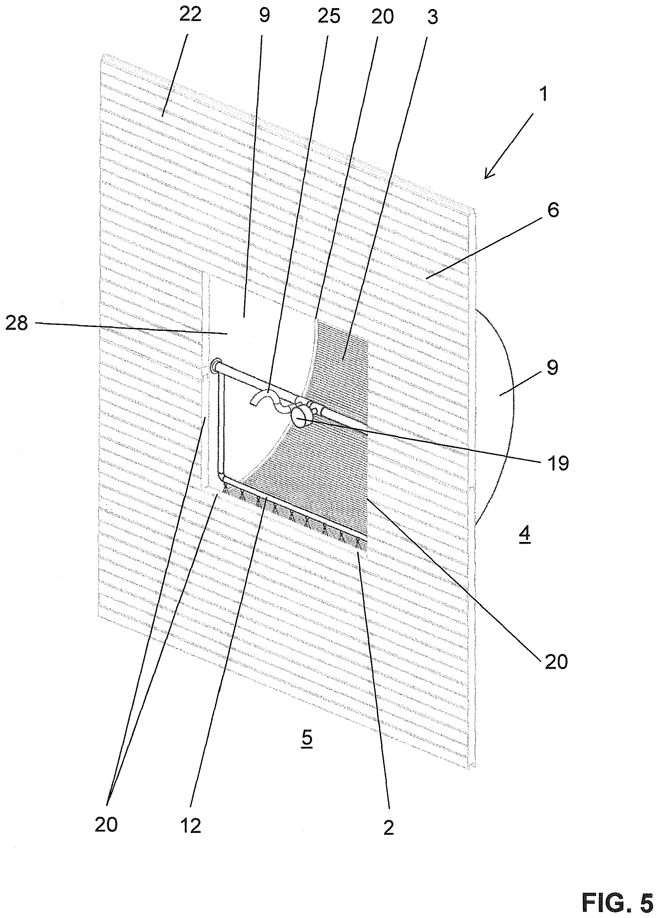

In der Figur 5 wird nun noch eine weitere perspektivische Ansicht der Filteranordnung 1 gezeigt. Hier wird die Ansicht im Wesentlichen von der Filterseite 5 dargestellt und man kann hier nochmals gut die Anordnung des Filterelementes 3, der Seitenwände 9 sowie der Reinigungseinheit 12 erkennen.

In den Figuren 7a, 7b, 8 und 9 wird eine weitere Ausführungsform der Filteranordnung 1 gezeigt. Gleiche Teile sind mit gleichen Bezugszeichen versehen und weisen im Wesentlichen gleiche Merkmale auf, wie anhand der Figuren 1 bis 5 beschrieben. Unterschiedlich ist im Wesentlichen die Bewegung der Reinigungseinheit 12, welche in der Ausführungsform gemäss den Figuren 7a, 7b, 8 und 9 durch ein Verschwenken der Luftdüsen 13 erfolgt, so dass durch die Luftdüsen Impulse in unterschiedlichen Richtungen abgebbar sind, wodurch die Reinigungseinheit 12 in unterschiedliche Richtungen verschwenkbar ist. Diese Ausführungsform wird besonders vorteilhaft dann eingesetzt, wenn die Mittelachse M bzw. die Achse A in der Vertikalen verlaufen.

Die Figuren 7a und 7b zeigen, dass die Reinigungseinheit 12 durch die winklige Anordnung von den Luftdüsen 13 und durch den Impuls beim Austritt der Luft aus den Luftdüsen 13 von einer Ruhelage bzw. Ausgangslage in eine Endlage bewegbar ist. Die Luftdüsen 13 sind verschwenkbar, so dass die Richtung der Bewegung der Reinigungseinheit veränderbar ist.

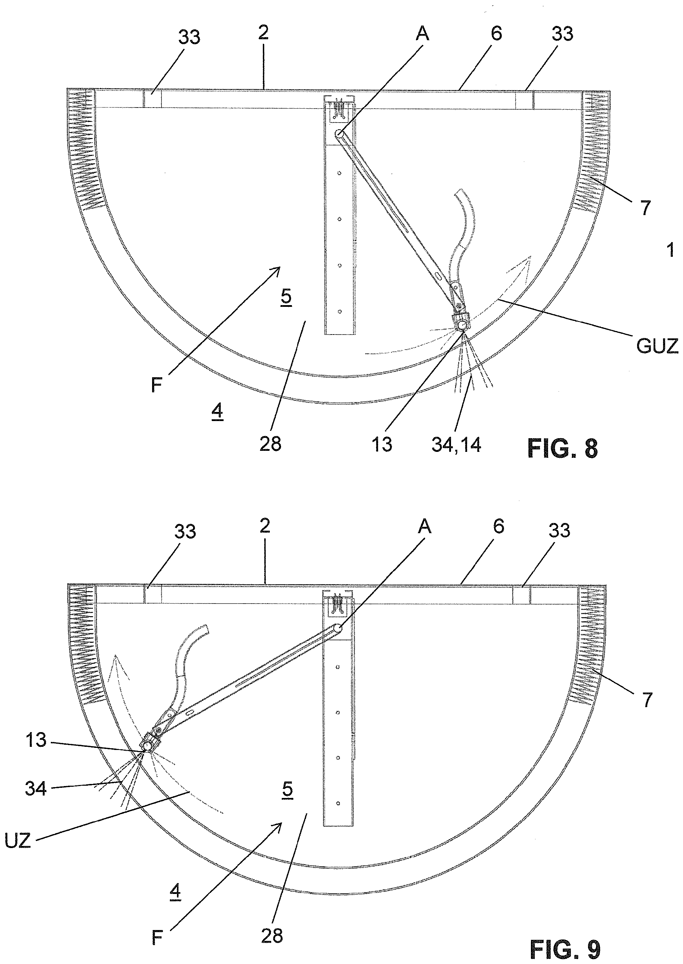

Die Verschwenkbarkeit der Luftdüsen 13 wird besonders gut in den Figuren 8 und 9 gezeigt. In der Figur 8 wird die Reinigungseinheit im Gegenuhrzeigersinn GUZ verschwenkt. Die Luftdüsen 13 sind dabei entsprechend orientiert, so dass der Luftstrahl 34 den Impuls in die entsprechende Richtung abgibt. In der Figur 9 sind die Luftdüsen 13 so orientiert, dass der Luftstrahl 34 den Impuls in die Richtung abgibt, dass sich die Reinigungseinheit im Uhrzeigersinn ZU bewegt.

Anhand der Figuren 7a und 7b wird nun die Verschwenkbarkeit und die Position der Luftdüsen 13 noch etwas genauer erläutert.

Die Luftdüsen 13 sind von einer ersten stabilen Position in eine zweite stabile Position verschwenkbar. In der ersten stabilen Position die Reinigungseinheit 12 von der Ruhelage in die Endlage bewegbar ist und in der zweiten stabilen Position ist die Reinigungseinheit 12 von der Endlage in die Ruhelage bewegbar ist.

Die Reinigungseinheit 12 umfasst in der bevorzugten Ausführungsform im Wesentlichen zwei Lagerarme 16 und einen zu den Lagerarmen 16 verschwenkbaren Bügelarm 17. Im Bügelarm 17 sind die besagten Luftdüsen 13 angeordnet. Der Bügelarm 17 ist über Lagerstellen 35 an den Lagerarmen 16 gelagert. Die Lagerstellen sind dabei so ausgebildet, dass die besagte Verschwenkbarkeit zugelassen wird. Die Lagerstellen 35 können auch als Mechanismus ausgebildet sein.

Der in der Figur 7b, welche eine Detailansicht der Figur 7a ist, gezeigte Mechanismus 35 verbindet den Bügelarm 17 mit den Lagerarmen 16. Der Mechanismus 35 umfasst einen Kipphebel 31 mit einer Feder 32. Der Kipphebel 31 kann im Wesentlichen zwei stabile Positionen einnehmen. Der Kipphebel 31 umfasst hier einen ersten Hebelteil 36 und einen zweiten Hebelteil 37, welcher verschwenkbar zum ersten Hebelteil 36 in Verbindung steht. Der erste Hebelteil 36 steht verschwenkbar mit dem Lagerarm 16 in Verbindung und der zweite Hebelteil 37 steht fest mit dem Bügelarm 17 in Verbindung. Die Feder 32 verbindet den ersten Hebelteil 36 mit dem zweiten Hebelteil 37 und sorgt dafür, dass wenn die Hebelteile 36, 37 winklig zueinander stehen, die winklige Position gehalten wird.

Die Feder 32 ist hier eine Zugfeder, welche an einem Bolzen 38 an den Hebelteil 36, 37 eingehängt wird.

Besonders bevorzugt sind Anschlagsmittel 33 angeordnet, welche mit dem Kipphebel 31 zusammenarbeiten. Bei einer Kontaktierung des Kipphebels 31 mit dem Anschlagsmittel ist der Kipphebel 31 von der einen stabilen Position in die andere stabile Position bringbar. Vorzugsweise ist jeweils in Ruhelage und in der Endlage jeweils mindestens ein Anschlagsmittel 33 angeordnet. Folglich sorgen die Anschlagsmittel 33 für die Auslösung der Verschwenkung der Luftdüsen 13 zu den Armen, so dass die Umkehr der Bewegung erreicht werden kann.

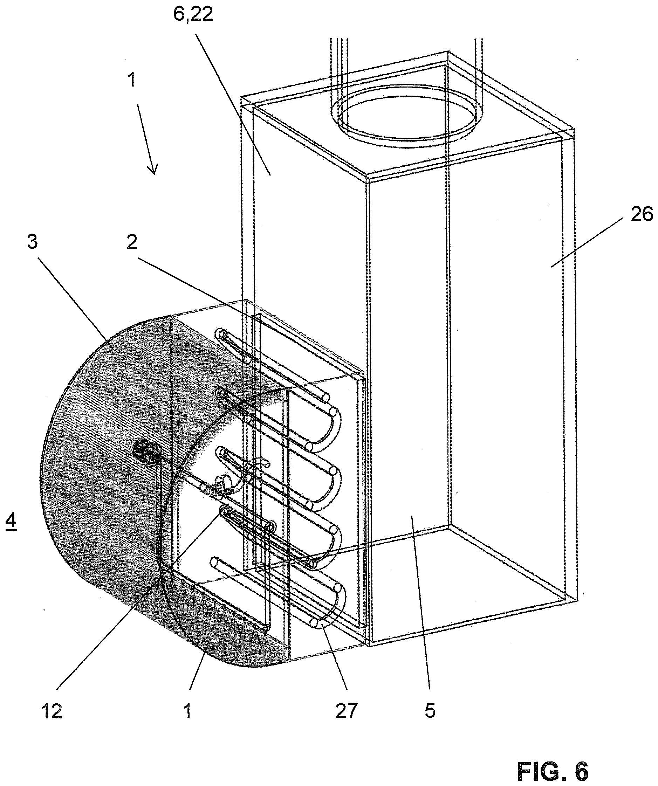

In der Figur 6 wird eine weitere Ausführungsform bzw. ein Einsatzgebiet der Filteranordnung 1 gemäss der obigen Beschreibung gezeigt. Hier umfasst die Filteranordnung 1, die gemäss obiger Beschreibung bereitgestellt wird, weiterhin einen Wärmetauscher 27 der in Flussrichtung des Fluides gesehen nach dem Filterelement 3 auf der Filterseite 5 angeordnet ist. Mit dem Wärmetauscher 27 kann die in der Abluft bzw. im dekontaminierten Fluid vorhandene Wärme vor Abgabe an die Umgebung mit einem Wärmeträger getauscht werden. Dabei wird der Wärmeträger entsprechend erwärmt und die Abluft entsprechend abgekühlt. Der Wärmeträger kann dann beispielsweise für die Beheizung des Raumes, in welchem das kontaminierte Fluid anfällt, eingesetzt werden. Als Wärmetauscher 27 wird vorzugsweise ein konventioneller Röhrenwärmetauscher oder aber ein Kreuzstromwärmetauscher mit Platten eingesetzt.

Die Anordnung des Wärmetauschers 27 auf der Filterseite 5 hat den Vorteil, dass der Wärmetauscher 27 nicht mit dem kontaminierten Fluid in Kontakt kommt. Somit wird eine Ablagerung der Kontaminationen auf dem Wärmetauscher 27 entsprechend vermieden, wobei die Wirksamkeit bzw. der Wirkungsgrad des Wärmetauschers über die Zeit nicht abfällt.

Über einen Abluftkanal 26 kann dann die durch das Filterelement 3 gereinigte und durch den Wärmetauscher 27 gekühlte Abluft entsprechend der Umgebung zugeführt werden.

Besonders bevorzugt wird die oben genannte Filteranordnung 1 in einem Stall zur Aufzucht und/oder zur Haltung von Tieren eingesetzt. Ein solcher Stall umfasst typischerweise einen Boden, mindestens eine von dieser am bodenwegstehende Seitenwand, die einen Stallinnenraum definiert und ein Dach das den Stallinnenraum nach oben hin abschliesst. Boden, Seitenwand und/oder Dach stellen dabei die Ebene 6 bereit. Die Öffnung 2 ist dabei in der besagten Seitenwand oder dem besagten Dach oder dem besagten Boden angeordnet, wobei dann die besagte Ebene 6 im Wesentlichen durch die Seitenwand und/oder das Dach und/oder den Boden aufgespannt wird. Der Stallinnenraum stellt dabei die kontaminierte Seite, also die die Rohfluidseite 4 bereit. Die Umgebung ausserhalb des Stalles ist dabei die Filterseite 5. Die Filteranordnung 5 ist dabei vorzugsweise derart angeordnet, dass sich diese in den Stallinnenraum hinein erstreckt. Hierdurch wird beim Reinigungsvorgang mit der Reinigungseinheit 12 sichergestellt, dass die Staubpartikel, die auf dem Filterelement 3 liegen wiederum in den Stallinnenraum, also in die Rohfluidseite 4 geblasen werden. Somit wird das Filterelement 2 bei der Reinigung von der Filterseite 5 mit Druckluft in Richtung der Rohfluidseite 4 in Richtung Rohfluidseite 4 beaufschlagt, wodurch die bei der Reinigung aus dem Filterelement 2 entfernbaren Kontaminationen in Richtung Rohfluidseite 4 bewegt werden.

Besonders bevorzugt ist die Filteranordnung bewegbar zur Öffnung 2 angeordnet. Beispielsweise kann die Filteranordnung in Führungsschienen angeordnet sein, sodass die Filteranordnung in diesen Führungsschienen von der Öffnung 2 weg bewegbar sind. Dabei kann der Landwirt bei der Reinigung des Stalles die Filteranordnung entsprechend wegschieben. Gerade bei Öffnungen, die im unteren Bereich der Seitenwand angeordnet sind, ist dies vorteilhaft, wenn der Landwirt die Filteranordnung 1 gegen das Dach bewegen kann, weil es bei Reinigungsarbeiten nötig ist, dass der Landwirt mit entsprechenden Maschinen auch den Boden reinigt. Ein Wegfahren der Reinigungsanordnung in Richtung des Daches hat dabei den Vorteil, dass der Landwirt die Reinigungsanordnung 1 nicht mit dem Traktor oder ähnlichen Gerätschaften touchiert und diese beschädigt oder gar zerstört.

Mit Blick auf die Figur 1 kann weiter gut erkannt werden, dass mehrere Filterelemente 3 nebeneinander angeordnet werden können. Hierfür muss die Öffnung 2 entsprechend grösser ausgebildet werden und es kann auf die Seitenwand 9 zwischen den einzelnen Filterelementen 3 verzichtet werden. Alternativ können die Seitenwände 9 von zwei benachbarten Filterelementen 3 auch mit entsprechenden Öffnung 2 versehen werden.

Bezüglich der Anordnung des Filterelementes 2 kann auch gesagt werden, dass das Filterelement 2 auch in einem separaten Filterraum, welcher mit dem Raum, in dem das Fluid kontaminiert wird, in Verbindung steht, angeordnet sein kann, wobei der Filterraum dann die Rohfluidseite darstellt.

Weiter ist anzumerken, dass die erfindungsgemässe Filteranordnung 1 auch in diversen anderen Einsatzgebieten einsetzbar ist. Beispielsweise sei hier ein Produktionsbetrieb, wie Futtermühlen oder Schweisswerkstätten oder Holzverarbeitungsbetriebe oder Pulverlackierwerke etc. genannt.

Zusammenfassend kann festgehalten werden, dass die Anordnung des sich von der Ebene 6 mit der Öffnung 2 erstreckenden Filterelementes 3 den Vorteil hat, dass keine Querschnittsverkleinerungen im Bereich der Filteranordnung 1 vorhanden sind. Somit können Druckverluste im Bereich des Filterelementes 3 entsprechend reduziert werden. Weiter kann aufgrund des Merkmals des sich von der Ebene 6 weg ragenden Filterelementes 3 das Filterelement 3 besonders gut gereinigt werden.

Zudem kann das Verhältnis zwischen dem Querschnitt der Öffnung 3 und der Oberfläche des Filterelementes 3 bzw. der Filteroberfläche einfach variiert und auf das gewünschte Verhältnis eingestellt werden.

**BEZUGSZEICHENLISTE**

| | | | |
|---|---|---|---|
| 1 | Filteranordnung | 30 | Mechanismus |
| 2 | Öffnung | 31 | Kipphebel |
| 3 | Filterelement | 32 | Feder |
| 4 | Rohfluidseite | 33 | Anschlag |
| 5 | Filterseite | 34 | Luftstrahl |
| 6 | Ebene | 35 | Lagerstellen |
| 7 | erster Abschnitt | 36 | erstes Hebelteil |
| 8 | zweiter Abschnitt | 37 | zweites Hebelteil |
| 9 | Seitenwand | 38 | Bolzen |
| 10 | Zwischenräume | | |
| 11 | Rand | | |
| 12 | Reinigungseinheit | | |
| 13 | Luftdüsen | | |
| 14 | Druckluft | | |
| 15 | Bügel | | |
| 16 | Lagerarm | | |
| 17 | Bügelarm | | |
| 18 | Motor | | |
| 19 | Gegengewicht | | |
| 20 | Seitenrand | | |
| 21 | Abschnitt | | |
| 22 | Wand | | |
| 23 | Druckluftanschluss | | |
| 24 | Stab | | |
| 25 | Schlauch | | |
| 26 | Abluftkanal | | |
| 27 | Wärmetauscher | | |
| 28 | Zwischenraum | | |

## Patentansprüche

1. Filteranordnung (1) umfassend eine Ebene (6) mit einer die Ebene (6) durchdringenden Öffnung (2) und ein über dieser Öffnung (2) angeordnetes Filterelement (3) zur Filterung eines Fluides, insbesondere eines gasförmigen Fluides, wobei das Fluid von einer Rohfluidseite (4) zu einer Filterseite (5) durch das Filterelement (3) und die Öffnung (2) hindurchführbar und durch das Filterelement (3) reinigbar ist, wobei sich das Filterelement (3) von dieser Ebene (6) mindestens über einen ersten Abschnitt (7) von der Ebene (6) weg erstreckt und über einen zweiten Abschnitt (8), der sich direkt oder indirekt dem ersten Abschnitt (7) anschliesst, auf die Ebene (6) zurück erstreckt, so dass sich das Filterelement (3) mit den Abschnitten über die Ebene (6) erstreckt, wobei durch die Abschnitte (7, 8) und die Ebene ein Zwischenraum (28) begrenzt wird, und dass die Filteranordnung (1) weiterhin eine Reinigungseinheit (12) umfasst, welche in besagtem Zwischenraum (28) angeordnet ist, wobei die Reinigungseinheit (12) Luftdüsen (13) umfasst, mittels welchen das Filterelement (3) mit Druckluft (14) beaufschlagbar ist, wobei Ablagerungen auf dem Filterelement (3) von der Filterseite in Richtung der Rohfluidseite (4) vom Filterelement (3) entfernbar sind, **dadurch gekennzeichnet,**
**dass** die Reinigungseinheit (12) durch den Impuls beim Austritt der Luft aus den Luftdüsen (13) von einer Ruhelage in eine Endlage bewegbar ist,
**dass** die Luftdüsen (13) verschwenkbar sind, so dass die Richtung der Bewegung der Reinigungseinheit (12) veränderbar ist, wobei die Luftdüsen (13) vorzugsweise von einer ersten stabilen Position in eine zweite stabile Position verschwenkbar sind, so dass in der ersten stabilen Position die Reinigungseinheit (12) von der Ruhelage in die Endlage bewegbar ist und in der zweiten stabilen Position die Reinigungseinheit (12) von der Endlage in die Ruhelage bewegbar ist; oder
**dass** die Reinigungseinheit (12) durch ein Gegengewicht (19) von der Endlage in die Ruhelage bewegbar ist.

2. Filteranordnung (1) Anspruch 1, **dadurch gekennzeichnet, dass** die Reinigungseinheit (12) im Bereich der Filterseite (5) angeordnet ist und relativ zum Filterelement (3) über das Filterelement (3) bewegbar, insbesondere verschwenkbar, ausgebildet ist.

3. Filteranordnung nach einem der vorhergehenden Ansprüche, **dadurch gekennzeichnet,**
**dass** die Reinigungseinheit (12) verschwenkbar um eine Achse (A), welche vorzugsweise der besagten Mittelachse (M) entspricht, ausgebildet ist,
und/oder dass die Reinigungseinheit (12) die Gestalt eines Bügels (15) mit zwei Lagerarmen (16) und einem die Lagerarme (16) verbindenden Bügelarm (17) aufweist, wobei im Bügelarm (17) die besagten Luftdüsen (13) angeordnet sind.

4. Filteranordnung nach einem der vorhergehenden Ansprüche, **dadurch gekennzeichnet, dass** die Luftdüsen (13) winklig angeordnet sind, insbesondere winklig zur Richtung der Bewegung der Reinigungseinheit (12) oder in Richtung der Bewegung der Reinigungseinheit (12).

5. Filteranordnung nach einem der vorhergehenden Ansprüche, **dadurch gekennzeichnet, dass** der Bügelarm (17) mit einem Mechanismus mit den Lagerarmen (16) in Verbindung steht, wobei der Mechanismus (30) ein Kipphebel (31) mit einer Feder (32) umfasst, welcher im Wesentlichen zwei stabile Positionen einnimmt und wobei vorzugsweise Anschlagsmittel (33) angeordnet sind, welche mit dem Kipphebel (31) zusammenarbeiten, wobei der Kipphebel (31) durch die Anschlagsmittel in die stabilen Positionen bewegbar ist und wobei in Ruhelage und Endlage jeweils mindestens ein Anschlagsmittel angeordnet ist.

6. Filteranordnung (1) nach einem der vorhergehenden Ansprüche, **dadurch gekennzeichnet, dass** sich das Filterelement (2) um eine in der bzw. parallel zur Ebene (6) verlaufende Mittelachse (M) halbkreisförmig und/oder elliptisch und/oder eckig, insbesondere 6-eckig oder 8-eckig oder vieleckig, von der Ebene (6) weg bzw. auf die Ebene (6) zu verläuft, und/oder
dass das Filterelement (2) benachbart zu den Rändern der Öffnung und entlang der Ränder der Öffnung bzw. in einem vergleichsweise kleinen Abstand zu den Rändern liegt.

7. Filteranordnung (1) nach einem der vorhergehenden Ansprüche, **dadurch gekennzeichnet, dass** die Mittelachse (M) in der Horizontalen (H) oder der Vertikalen (V) verläuft.

8. Filteranordnung (1) nach einem der vorhergehenden Ansprüche, **dadurch gekennzeichnet, dass** sich das Filterelement (3) von der besagten Ebene (6) in die Rohfluidseite (4) hinein erstreckt.

9. Filteranordnung (1) nach einem der vorhergehenden Ansprüche, **dadurch gekennzeichnet, dass** die Filteranordnung (1) weiterhin mindestens eine Seitenwand (9) umfasst, wobei die mindestens eine Seitenwand (9) sich über Zwischenräume (10) zwischen der Ebene (6) und dem Rand (11) des Filterelementes (3) erstreckt.

10. Filteranordnung (1) nach einem der vorhergehenden Ansprüche, **dadurch gekennzeichnet, dass** das Filterelement (3) und gegebenenfalls die Seitenwand (9) sich vollständig über den Querschnitt der Öffnung (2) erstrecken, so dass kontaminiertes Fluid zwingend das Filterelement (3) durchdringen muss, bevor die Öffnung (2) erreicht wird.

11. Filteranordnung (1) nach einem der vorhergehenden Ansprüche, **dadurch gekennzeichnet, dass** das Filterelement (2) ein plissierter Filter, insbesondere aus einem Polyestervlies, umfasst, und/oder das Filterelement (2) eine Filteroberfläche von mindestens 15 m², besonders bevorzugt von mindestens 20 m² aufweist, und/oder dass das Filterelement (2) ein Luftfilter ist,
und/oder dass die Anordnung weiterhin einen Wärmetauscher (20) umfasst, der in Flussrichtung des Fluides nach dem Filterelement (3) auf der Filterseite (5) angeordnet ist,
und/oder dass das Verhältnis von Filterfläche um eine Faktor im Bereich von 10 bis 50, besonders bevorzugt im Bereich von 15 bis 30 grösser ist als die Querschnittsfläche der Öffnung (4).

12. Stall zur Aufzucht oder zur Haltung von Tieren, umfassend mindestens einen Boden, mindestens eine von diesem Boden wegstehende Seitenwand, die einen Stallinnenraum definiert, und ein Dach, das den Stallinnenraum nach oben hin abschliesst, **dadurch gekennzeichnet, dass** der Stall weiterhin mindestens eine Filteranordnung nach einem der vorhergehenden Ansprüche umfasst und dass in der besagten Seitenwand und/oder dem besagten Dach die besagte Öffnung angeordnet ist, wobei die Ebene im Wesentlichen durch Seitenwand und/oder Dach aufgespannt wird.

## Claims

1. A filter arrangement (1) including a plane (6) with an opening (2) which penetrates the plane (6) and a filter element (3) which is arranged over said opening (2) for filtering a fluid, in particular a gaseous fluid, wherein the fluid is guidable from an unfiltered side (4) through the filter element (3) and the opening (2) to a filter side (5) and can be cleaned by the filter element (3), **characterized in that** the filter element (3) extends away from the plane (6) from said plane (6) at least over a first portion (7) and extends back to the plane (6) over a second portion (8) which connects directly or indirectly to the first portion (7) such that the filter element (3) extends over the plane (6) with the portions, wherein an intermediate chamber (28) is defined by the portions (7, 8) and the plane, and that the filter arrangement (1) additionally includes a cleaning unit (12) which is arranged in said intermediate chamber (28), wherein the cleaning unit (12) includes air nozzles (13) by means of which the filter element (3) can be acted upon with compressed air (14), wherein deposits on the filter element (3) can be removed from the filter element (3) from the filter side in the direction of the unfiltered side (4), **characterized in that** the cleaning unit (12) is movable into an end position from a rest position as a result of the pulse when air exits from the air nozzles (13), that the air nozzles (13) are pivotable such that the direction of movement of the cleaning unit (12) is modifiable, wherein the air nozzles (13) are preferably pivotable from a first stable position into a second stable position such that in the first stable position the cleaning unit (12) is movable from the rest position into the end position and in the second stable position the cleaning unit (12) is movable from the end position into the rest position, or that the cleaning unit (12) movable from the end position into the rest position by means of a counterweight (19) .

2. The filter arrangement (1) as claimed in claim 1, **characterized in that** the cleaning unit (12) is arranged in the region of the filter side (5) and is realized so as to be movable, in particular pivotable, over the filter element (3) relative to the filter element (3).

3. The filter arrangement as claimed in one of the preceding claims, **characterized in that** the cleaning unit (12) is realized so as to be pivotable about an axis (A) which preferably corresponds to said center axis (M), and/or that the cleaning unit (12) comprises the form of a bracket (15) with two bearing arms (16) and one bracket arm (17) which connects the bearing arms (16), wherein said air nozzles (13) are arranged in the bracket arm (17).

4. The filter arrangement as claimed in one of the preceding claims, **characterized in that** the air nozzles (13) are arranged in an angular manner, in particular in an angular manner with respect to the direction of movement of the cleaning unit (12) or in the direction of movement of the cleaning unit (12).

5. The filter arrangement as claimed in one of the preceding claims, **characterized in that** the bracket arm (17) communicates with the bearing arms (16) by way of a mechanism, wherein the mechanism (30) includes a rocker lever (31) with a spring (32) which assumes substantially two stable positions and wherein stop means (33) are preferably arranged which interact with the rocker lever (31), wherein the rocker lever (31) is movable into the stable positions by the stop means and wherein in each case at least one stop means is arranged in the rest position and end position.

6. The filter arrangement (1) as claimed in one of the preceding claims, **characterized in that** the filter element (2) extends in a semi-circular manner and/or elliptical manner and/or angular manner, in particular in a hexagonal or octagonal or polygonal manner, away from the plane (6) or toward the plane (6) about a center axis (M), which extends in the or parallel to the plane (6), and/or **in that** the filter element (2) lies adjacent the edges of the opening and along the edges of the opening or at a comparatively small spacing from the edges.

7. The filter arrangement (1) as claimed in one of the preceding claims, **characterized in that** the center axis (M) extends in the horizontal (H) or the vertical (V).

8. The filter arrangement (1) as claimed in one of the preceding claims, **characterized in that** the filter element (3) extends from said plane (6) right into the unfiltered side (4).

9. The filter arrangement (1) as claimed in one of the preceding claims, **characterized in that** the filter arrangement (1) additionally includes at least one side wall (9), wherein the at least one side wall (9) extends over intermediate chambers (10) between the plane (6) and the edge (11) of the filter element (3).

10. The filter arrangement (1) as claimed in one of the preceding claims, **characterized in that** the filter element (3) and where applicable the side wall (9) extend completely over the cross section of the opening (2) such that contaminated fluid has forcibly to pass through the filter element (3) before the opening (2) is reached.

11. The filter arrangement (1) as claimed in one of the preceding claims, **characterized in that** the filter element (2) includes a pleated filter, in particular produced from a polyester nonwoven material, and/or the filter element (2) comprises a filter surface of at least 15 m², in a particularly preferred manner of at least 20 m², and/or **in that** the filter element (2) is an air filter, and/or.
that the arrangement additionally includes a heat exchanger (20) which is arranged on the filter side (5) downstream of the filter element (3) in the direction of flow of the fluid, and/or that the ratio of filter area is greater by a factor within the range of between 10 and 15, in a particularly preferred manner within the range of between 15 and 30 than the cross sectional area of the opening (4).

12. A stall for raising or keeping animals, said stall including at least one floor, at least one side wall which stands away from said floor and defines a stall interior, and a roof which closes off the stall interior at the top, **characterized in that** the stall additionally includes at least one filter arrangement as claimed in one of the preceding claims and **in that** said opening is arranged in said side wall and/or said roof, wherein the plane is spanned substantially by the side wall and/or the roof.

## Revendications

1. Un arrangement de filtre (1) comprenant un plan (6) ayant une ouverture (2) traversant le plan (6) et un élément filtrant (3) disposé au-dessus de cette ouverture (2) pour filtrer un fluide, en particulier un fluide en forme de gaz, où le fluide peut être passé depuis un côté fluide brut (4) vers un côté filtre (5) à travers l'élément filtrant (3) et l'ouverture (2) et peut être nettoyé par l'élément filtrant (3), où l'élément filtrant (3) s'étend en s'écartant de ce plan (6) par l'intermédiaire d'une première partie (7) et s'étend en retournant au plan (6) par l'intermédiaire d'une deuxième partie (8) qui se raccorde directement ou indirectement à la première partie (7), de sorte que l'élément filtrant (3) s'étend par l'intermédiaire des parties (7, 8) sur le plan (6), où un espace intermédiaire (28) est délimité par les parties (7, 8) et le plan, et que l'arrangement de filtre (1) comprend également une unité de nettoyage (12), laquelle est disposée dans ledit espace intermédiaire (28), où l'unité de nettoyage (12) comporte des buses d'air (13) au moyen desquelles l'élément filtrant (3) peut être exposé à de l'air sous pression (14), où les dépôts sur l'élément filtrant (3) peuvent être enlevés de l'élément filtrant (3) depuis le côté filtre en direction du côté fluide brut (4), **caractérisé en ce que** l'unité de nettoyage (12) peut être déplacée depuis une position de repos vers une position terminale par l'impulsion lors de la sortie de l'air des buses d'air (13), que les buses d'air (13) peuvent d'être pivotées, de sorte que la direction du déplacement de l'unité de nettoyage (12) peut être ajustée, où les buses d'air (13) peuvent d'être pivotées préférablement depuis une première position stable vers une seconde position stable, de sorte que dans la première position stable, l'unité de nettoyage (12) peut être déplacée depuis la position du repos vers la position terminale et que dans la seconde positon stable, l'unité de nettoyage (12) peut être déplacée depuis la position terminale vers la position de repos ; ou que l'unité de nettoyage (12) peut être déplacée depuis la position terminale vers la position de repos par l'intermédiaire d'un contrepoids (19).

2. Un arrangement de filtre (1) selon la revendication 1, **caractérisé en ce que** l'unité de nettoyage (12) est disposée dans le domaine du côté filtre (5) et est formée de façon à pouvoir être déplacée par rapport à l'élément filtrant (3) sur l'élément filtrant (3), en particulier de façon à pouvoir être pivotée.

3. Un arrangement de filtre selon une des revendications précédentes, **caractérisé en ce que** l'unité de nettoyage (12) est formée de façon à pouvoir être pivotée autour d'un axe (A), lequel correspond préférablement au dit axe central (M),
et/ou que l'unité de nettoyage (12) présente la forme d'une anse (15) avec deux bras de montage (16) et un bras d'anse (17) reliant les bras de montage (16), où les dites buses d'air (13) sont disposées dans le bras d'anse (17).

4. Un arrangement de filtre selon une des revendications précédentes, **caractérisé en ce que** les buses d'air (13) sont disposées de manière angulaire, en particulier de manière angulaire par rapport à la direction de déplacement de l'unité de nettoyage (12), ou en direction de déplacement de l'unité de nettoyage (12).

5. Un arrangement de filtre selon une des revendications précédentes, **caractérisé en ce que** le bras d'anse (17) est en liaison par l'intermédiaire d'un mécanisme avec les bras de montage (16), où le mécanisme (30) comporte un levier basculant (31) ayant un ressort (32), lequel peut occuper sensiblement deux positions stables, et où préférablement des moyens de butée (33) sont disposés, lesquels coopèrent avec le levier basculant (31), où le levier basculant (31) peut être déplacé par les moyens de butée vers les positions stables, et où au moins un moyen de butée est respectivement disposé dans la position de repos et la position terminale.

6. Un arrangement de filtre (1) selon une des revendications précédentes, **caractérisé en ce que** l'élément filtrant (2) s'étend autour de, respectivement en parallèle à, un axe central (M) de forme semi-circulaire et/ou elliptique et/ou angulaire, en particulier hexagonale ou octogonale ou polygonale, en s'écartant, respectivement en s'approchant, du plan (6), et/ou que l'élément filtrant (2) se situe de façon avoisinante aux bords de l'ouverture et le long des bords de l'ouverture, respectivement à une distance relativement faible aux bords.

7. Un arrangement de filtre (1) selon une des revendications précédentes, **caractérisé en ce que** l'axe moyen (M) s'étend dans l'horizontale (H) ou dans la verticale (V)

8. Un arrangement de filtre (1) selon une des revendications précédentes, **caractérisé en ce que** l'élément filtrant (3) s'étend depuis le dit plan (6) dans le côté fluide brut (4).

9. Un arrangement de filtre (1) selon une des revendications précédentes, **caractérisé en ce que** l'arrangement de filtre (1) comprend également au moins une paroi latérale (9), où l'au moins une paroi latérale (9) s'étend sur des espacés intermédiaires (10) entre le plan (6) et le bord (11) de l'élément filtrant (3).

10. Un arrangement de filtre (1) selon une des revendications précédentes, **caractérisé en ce que** l'élément filtrant (3) est éventuellement la paroi latérale (9) s'étendent entièrement sur la section transversale de l'ouverture (2), de sorte qu'un fluide contaminé doit obligatoirement pénétrer l'élément filtrant (3), avant d'atteindre l'ouverture (2).

11. Un arrangement de filtre (1) selon une des revendications précédentes, **caractérisé en ce que** l'élément filtrant (2) comprend un filtre plissé, en particulier en feutre de polyester, et/ou l'élément filtrant (2) comporte une surface de filtre d'au moins 15 m², particulièrement préférablement d'au moins 20 m², et/ou que l'élément filtrant (2) est un filtre à air,
et/ou que l'arrangement comprend également un échangeur de chaleur (20) qui est disposé en direction du flux de fluide après l'élément filtrant (3) sur le côté filtre (5) et/ou que le rapport entre la surface de filtre et la surface en section transversale de l'ouverture (4) est supérieur d'un facteur dans la plage 10 à 50, particulier préférablement dans la plage de 15 à 30.

12. Une stabulation pour l'élevage ou l'entretien d'animaux, comprenant au moins un fond, au moins une paroi latérale faisant saillie par rapport à ce fond, qui définit un espace intérieur de la stabulation, et un toit qui délimite la stabulation vers le haut, **caractérisé en ce que** la stabulation comprend également au moins un arrangement de filtre selon une des revendications précédentes et que la dite ouverture est disposée dans la dite paroi latérale et/ou le dit toit, où le plan est sensiblement formé par la paroi latérale et/ou le toit.
